# EUROPEAN PATENT SPECIFICATION

(11) **EP 2 901 434 B1**
(45) Date of publication and mention of the grant of the patent: **13.03.2019**
(21) Application number: 13774312.6
(22) Date of filing: 24.09.2013
(51) Int. Cl.: G08B 17/113, G08B 17/10, F16B 37/04, F16L 25/14, G01N 1/26, F16L 19/06, F16L 27/12

(54) **ADAPTER FOR SMOKE DETECTION SYSTEM**
ADAPTER FÜR EINEN RAUCHMELDER
ADAPTATEUR POUR SYSTÈME DE DÉTECTION DE FUMÉE

(30) Priority: 27.09.2012 ES 201231498
(43) Date of publication of application: 05.08.2015
(73) Proprietor: UTC Fire & Security Americas Corporation, Inc., Bradenton, FL 34202 (US)
(72) Inventor: GANDARA, Miguel Angel, Perez, Farmington, CT 06032 (US); GIMENEZ, David, Farmington, CT 06032 (US)
(74) Representative: Schmitt-Nilson Schraud Waibel Wohlfrom Patentanwälte Partnerschaft mbB
(86) International application number: PCT/US2013/061499
(87) International publication number: WO 2014/052342

(56) References cited:
- EP-A1- 0 327 080
- WO-A1-2010/140001
- FR-A1- 2 670 010
- US-B1- 8 205 915

## Description

### Cross-Reference to Related Application

This application claims priority to Spanish Patent Application No. 201231498, filed on September 27, 2012.

### Background

High Sensitivity Smoke Detector (HSSD) systems generally include an aspirating fan to draw air from a protected area via a network of sampling pipes and sampling holes to a high-sensitivity, precision detector or sensor. The sampled air is then passed through the detector, which analyzes the air and generates a warning signal when appropriate (e.g., when combustion gasses are present). Typically, these systems are provided proximal the protected zone, with each requiring its own power source. The systems communicate with one another, and with other devices, over a network and may be monitored or ultimately controlled by a user operating a building management system.

Installation of such precision systems presents several challenges. In facilities in which pre-existing systems are removed in favor of HSSD systems, the new systems may need to be fitted to existing air conduits. Generally, such retrofitting requires removal of a portion of the conduits and fitting the new system in place. However, often such removal and placement is time-consuming, as the conduits need to be precisely positioned and/or temporarily removed to allow placement and air-tight connection with the new systems. In many cases, a reduced time to installation is desirable, for example, to facilitate implementation of the system between phases of construction, or when a large number of components and/or systems are being installed, as the cumulative effects of even a relatively short delay can be costly.

What is needed are improved adapter and methods for coupling or fitting smoke detector systems with air conduits such as pipes.
FR 2 670 010 A1 discloses a smoke detection device with a detector unit. The detector unit is accommodated in a housing to which branch lines are connected by means of respective cable glands. Each gland consists of a sleeve or cylindrical body formed integrally with the housing. Further, a seal is received within the sleeve and is pressed against it by means of a nut.
EP 0 327 00 A1 a pipe coupling for connecting two pipes to each other. The pipe coupling is formed by a housing with two open ends in which the pipes can be clamped. Both pipes to be connected to each other have the same diameter.
US 8 205 915 B1 discloses a pipe fitting for connecting tubing or piping without using tools which comprises a retaining ring and a pusher that exposes, when removed, the clampinig, sealing and fastening mechanisms of the fitting.

### Summary

According to the invention, an adapter for coupling a smoke detection system having the features according to claim 1, a method for fitting a smoke detection system with a pipe having the features according to claim 10, and a smoke detection system having the features of claim 15 are provided. Preferred embodiments of the invention are defined in the dependent claims.

Embodiments of the disclosure may provide an adapter for coupling a smoke detection system with a pipe. The adapter includes a first, hollow cylindrical body including a first end configured to receive and seal with a port of the smoke detection system, and a second end. The adapter also includes a second, hollow cylindrical body including a first end coupled with the second end of the first cylindrical body, and a second end, with the second cylindrical body receiving the pipe with the second end. The adapter further includes a gland coupled with the second end of the second cylindrical body, the gland being configured to receive the pipe therethrough and tighten to seal with the pipe, such that the pipe communicates with the smoke detection system via at least the first cylindrical body.

Embodiments of the disclosure may also provide a method of fitting a smoke detection system with a pipe. The method includes sliding the pipe through a gland and into a second cylindrical body of an adapter, and sliding the adapter away from the pipe such that a first cylindrical body of the adapter is received into a port of the smoke detection system. The first and second cylindrical bodies are hollow and coupled together and define a flowpath through the adapter, with the flowpath fluidly connecting the pipe and the port. The method also includes sealing an outer diameter of the first cylindrical body with the port, and sealing pipe and the adapter using the gland.

Embodiments of the disclosure may also provide a smoke detection system. The smoke detection system includes a backplane including a first port, and a detector module including a sensor for detecting smoke in a volume of air, and a second port aligned with the first port of the backplane. The detector module is configured to receive the volume of air from the first port of the backplane via the second port. The system also includes an adapter configured to couple with first port with a pipe. The adapter includes a first, hollow cylindrical body having a first end configured to seal with the first port, and a second end. The adapter also includes a second, hollow cylindrical body including a first end coupled with the second end of the first cylindrical body, and a second end. The second cylindrical body receives the pipe through the second end. The adapter also includes a transition section extending between and coupling together the first and second cylindrical bodies so as to define a flowpath through the adapter. The adapter further includes a gland extending from the second end of the second cylindrical body. The gland is configured to receive the pipe therethrough and tighten to seal with the pipe, such that the pipe communicates with the smoke detection system via the first cylindrical body, the transition section, and the second cylindrical body.

### Brief Description of the Drawings

The accompanying drawings, which are incorporated in and constitute a part of this specification, illustrate aspects of the present teachings and together with the description, serve to explain principles of the present teachings. In the figures:
Figure 1 illustrates a perspective view of a section of a pipe adapter, according to an embodiment.
Figure 2 illustrates another perspective view of a section of a pipe adapter, according to an embodiment.
Figure 3 illustrates an exploded perspective view of the pipe adapter, according to an embodiment.
Figure 4 illustrates a side cross-sectional view of another pipe adapter, according to an embodiment.
Figure 5 illustrates a side cross-sectional view of yet another pipe adapter, according to an embodiment.
Figure 6 illustrates a side cross-sectional view of still another pipe adapter, according to an embodiment.
Figure 7 illustrates a partially-exploded, perspective view of a smoke detection system employing one or more pipe adapters, according to an embodiment.
Figure 8 illustrates a flowchart of a method for installing a smoke detection system, according to an embodiment.

### Detailed Description

Reference will now be made in detail to various embodiments of the present teachings, an example of which is illustrated in the accompanying drawings. Wherever possible, the same reference numbers will be used throughout the drawings to refer to the same or like parts.

In the following description, reference is made to the accompanying drawings that form a part thereof, and in which is shown by way of illustration specific implementations in which may be practiced. These implementations are described in sufficient detail to enable those skilled in the art to practice these implementations and it is to be understood that other implementations may be utilized and that changes may be made without departing from the scope of the present teachings. The following description is, therefore, merely exemplary,

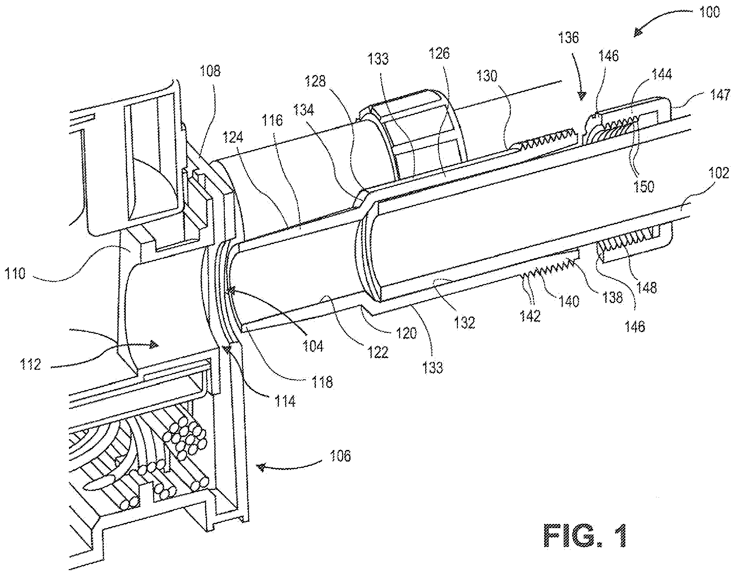

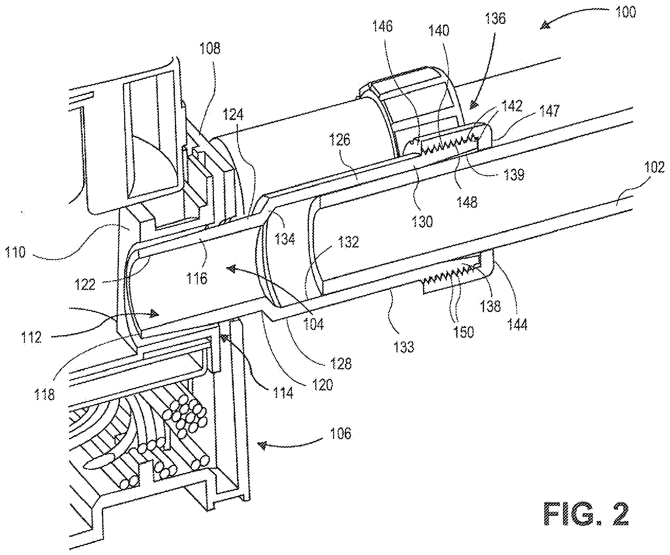

Figures 1 and 2 illustrate sectional views of an adapter 100, with Figure 1 illustrating receiving the adapter 100 on a pipe 102, and Figure 2 illustrating further receiving and sealing the adapter 100 in a first port 104 of a smoke detection system 106, according to an embodiment. The smoke detection system 106 may be a new HSSD system or may be any other type of smoke detection system. It will be appreciated that the adapter 100 may be configured for use with any type of smoke detection system, whether HSSD or conventional, in new installations or in retrofits of existing pipes 102 to new systems 106.

In an embodiment, the smoke detection system 106 may be modular, including a backplane 108 and a detector module 110, as will be described in greater detail below. The first port 104 may be defined by the backplane 108, extending therethrough, and may be aligned with a second port 112 defined in the detector module 110. The second port 112 may adjoin the first port 104 or otherwise be continuous with the first port 104, or may be offset therefrom by a gap 114, as shown.

The adapter 100 may include a first cylindrical body 116 having a first end 118 and a second end 120. The first cylindrical body 116 may be hollow, defining an inner surface 122 extending between the first and second ends 118, 120. The inner surface 122 may have a substantially uniform diameter, but in other embodiments may be tapered or otherwise have a non-uniform dimension between the first and second ends 118, 120. The first cylindrical body 116 may also define an outer surface 124. At least a portion of the outer surface 124 may be tapered proximal the first end 118, so as to expand radially outward proceeding away from the first end 118 and toward the second end 120. The diameter of the outer surface 124 proximal the first end 118 may be less than the diameter of the ports 104, 112, while the diameter of the outer surface 124 proximal the second end 120 may be equal to or larger than the diameter of one or both ports 104, 112. In another embodiment, the outer surface 124 may be substantially uniform in diameter and configured to fit snugly in the port(s) 104, 312 and/or may be compressed by an amount to provide a resistance or "snap" fit or seal with the port(s) 104, 112.

As shown in Figure 2, the first end 118 of the first cylindrical body 116 may slide into and/or through one or both ports 104, 112, for example, such that the first cylindrical body 116 bridges the gap 114. In other embodiments, the port 104 and/or port 112 may include a protrusion that is received into the first end 118. Either such arrangement is within the scope of the first end 118 "receiving" the port 104 and/or 112. In embodiments in which the first end 118 is slid into the ports 104, 112, the extent of such sliding may be controlled by the geometry of the outer surface 124, for example, the outer surface 124 may be sized to engage one or both ports 104, 112 after a portion of the first cylindrical body 116 is slid into and/or through one or both ports 104, 112. A force urging such sliding may serve to provide a press-fit, sealing the outer surface 124 of the first cylindrical body 1 16 with one or both ports 104, 112.

The adapter 100 may also include a second cylindrical body 126, which may also have a first end 128 and a second end 130. Additionally, the second cylindrical body 126 may be hollow, defining an inner surface 132 extending between the first and second ends 128, 130. The first end 128 may be disposed proximal and/or be coupled with the second end 120 of the first cylindrical body 116. Moreover, the inner surface 132 of the second cylindrical body 126 and the inner surface 122 of the first cylindrical body 116 may be in fluid communication with one another, such that the adapter 100 defines a flowpath extending between the second end 130 of the second cylindrical body 126 and the first end 118 of the first cylindrical body 116. The second cylindrical body 126 may also define an outer surface 133, which may be tapered or have a generally constant, cylindrical geometry.

The second cylindrical body 126 may be sized so as to receive the pipe 102, for example, along the inner surface 132, with the outer surface 133 distanced from the inner surface 132 by a sufficient wall thickness for the second cylindrical body 126. In other embodiments, the second cylindrical body 126 may be slid into the pipe 102. Both arrangements are within the scope of the second cylindrical body 126 receiving the pipe 102. Further, it will be appreciated that "sufficient" wall thickness may be determined by a variety of factors, including the intended application, fluid pressures, bending moments, and/or material strength. Moreover, at least depending on the relative sizing of the pipe 102 and the ports 104, 112, the inner surfaces 122 and 132 and the outer surfaces 124 and 133 may have different dimensions. Accordingly, a transition section 134 may be provided, extending between and connecting together the first end 128 of the second cylindrical body 126 and the second end 120 of the first cylindrical body 116. The transition section 134 may serve to make up the difference between dimensions of the outer surfaces 124 and 133 and the inner surfaces 122 and 132, providing a smooth transition between the first and second cylindrical bodies 116, 126. The transition section 134 may be rigid or flexible, e.g., may be or include flexible tubing or hose.

The adapter 100 may also include a gland 136, which may include a gland body 138 extending from the second end 130 of the second cylindrical body 126. The gland body 138 may have an open end 139, which may be tapered radially inward proceeding toward the second cylindrical body 126. Further, the gland body 138 may define an outer surface 140, which may include a plurality of threads 142, as shown. However, although illustrated as being threaded along the extent of the outer surface 140, it will be appreciated that the threaded outer surface 140 may instead be threaded along a portion thereof, and/or may omit threads 142 entirely.

The gland 136 may also include a nut 144, which may define a first end 146 and a second end 147. The nut 144 may also define an inner surface 148, which may be threaded along at least a portion thereof, thus providing threads 150. Further, the second end 147 may have an open diameter that is less than an open diameter of the first end 146 of the nut 144, for example, the open diameter of the second end 147 may be slightly larger than the outer diameter of the pipe 102, such that the pipe 102 slides through the nut 144 with a minimal clearance, as shown in Figure 1. The first end 146, in turn, may be sized to fit over the outer surface 140 of the gland body 138, and be screwed or threaded thereto, such that the threads 150 and the threads 142 are enmeshed, as shown in Figure 2. Further, the inner surface 148 may be tapered radially inward, proceeding from the first end 146 to the second end 147, but in other embodiments, may have a substantially uniform inner surface.

It will be appreciated that the first cylindrical body 116, the second cylindrical body 126, the transition section 134, and the gland body 138 may be integrally formed, for example, cast or molded from a single die or using any other casting or molding method. In other embodiments, one or more of the that the first cylindrical body 116, the second cylindrical body 126, the transition section 134 and the gland body 138, may be formed from a separate part, e.g., from a separate mold or casting, and then connected, e.g., fastened, welded, brazed, etc., with an adjacent component of the adapter 100. As the term is used herein, "coupling" two pieces together is intended to encompass such integrally-formed parts, as well as parts connected together in any manner, unless otherwise expressly indicated herein.

In at least one embodiment, the first cylindrical body 116, the second cylindrical body 126, the transition section 134, and the gland body 138 may be at least partially constructed of a plastic, a composite material, an elastomeric material, combinations thereof, or the like. For example, at least one of the first cylindrical body 116, the second cylindrical body 126, and the gland body 138 may be acrylonitrile butadiene styrene (ABS). In other embodiments, the transition section 134 may be or include a flexible tubing or hose coupled to the first and second cylindrical bodies 116, 126.

With continued reference to Figures 1 and 2, exemplary operation of the adapter 100 connecting the pipe 102 with the module 110 of the smoke detection system 106 may be appreciated. The pipe 102 may be cut or otherwise provided spaced from the port 104 by a length that is at least greater than an axial length of the first cylindrical body 116. Further, as shown in Figure 1, the gland 136 and the second cylindrical body 126 may receive the pipe 102, with the inner surface 132 of the second cylindrical body 126 having a diameter that is slightly larger than the outer diameter of the pipe 102, For example, the adapter 100 may be configured to receive the pipe 102 prior to the placement of the smoke detection system 106, such that that smoke detection system 106 is positioned to maintain the offset between the port 104 and the pipe 102, enabling the adapter 100 to be slid onto the pipe 102, In another embodiment, the smoke detection system 106 may be placed into position prior to the adapter 100, with the widened mouth of the open end 139 of the gland body 138 allowing the adapter 100 to be slid on the pipe 102, It will be appreciated that the adapter 100 may be received on the pipe 102 in any order with respect to positioning some or all of the smoke detection system 106.

Further, the second cylindrical body 126 may receive the pipe 102 along a portion or all of an axial length thereof, with the axial length being defined between the second end 130 and the first end 128. The axial length of the second cylindrical body 126 may be greater than the distance provided between the end of the pipe 102 and the port 104. In turn, the distance between the end of the pipe 102 and the port 104 may be greater than the axial distance between the first and second ends 118, 120 of the first cylindrical body 116, such that the first end 118 of the first cylindrical body 116 is spaced apart from the port 104, when the pipe 102 is received into the second cylindrical body 126, as shown in Figure 1. Thereafter, the adapter 1 00 may be slid toward the smoke detection system 106 and "away" from the pipe 102, such that the first cylindrical body 116 is at least partially received into and/or through the ports 104, 112 and may seal with one or both thereof. The sliding of the adapter 100 away from the pipe 102 may reduce the length of the pipe 102 received into the second cylindrical body 126, with the difference between the length of the pipe 102 and the length of the second cylindrical body 126 providing for play, enabling the adapter 100 to act as a "slip" coupling, which may promote connection between two stationary bodies (e.g., the pipe 102 and the smoke detection system 106) and/or allow for greater tolerance in the installation of the smoke detection system 106.

Once the adapter 100 is in position, the nut 144 may be threaded to the gland body 138, as shown in Figure 2. Such threading of the nut 144 may force the gland body 138, or another component of the gland 136, to contract radially inward and seal with the pipe 102. In other embodiments, the gland 136 may receive bracket and/or an elastomeric sleeve or seal ring snugly around the pipe 102. Such bracket and/or elastomeric sleeve may be received through the open end 139 of the gland body 138 and seated therein when the nut 144 is threaded to the gland body 138, thus providing the seal between the gland body 138 and the pipe 102 without substantially deflecting the gland body 138.

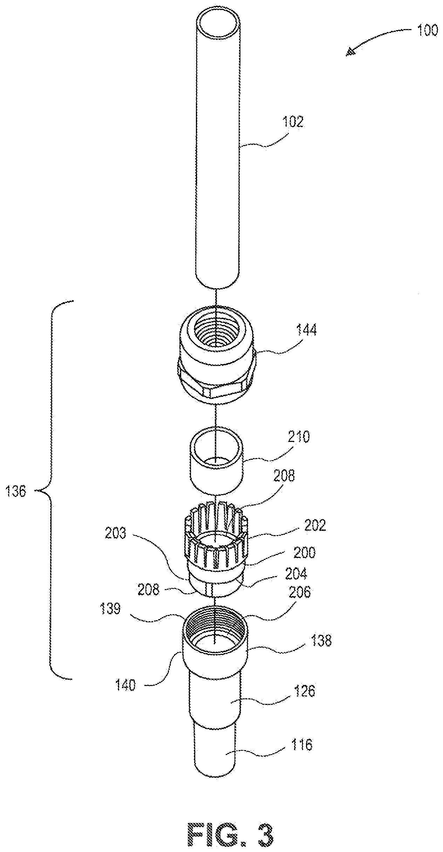

Figure 3 illustrates an exploded perspective view of the adapter 100, according to an embodiment. As discussed above, the adapter 100 may include at least the first and second cylindrical bodies 116, 126, and the gland 136. The gland 136 may include the gland body 138 with the open end 139 and the threaded outer surface 140, as well as the nut 144. The gland body 138 and at least a portion of the second cylindrical body 126 may receive at least a portion of the pipe 102, and the nut 144 may be threaded to the gland body 138 to secure and seal the pipe 102 with the adapter 100.

As shown, the gland 136 may also include a bracket 200. The bracket 200 may be segmented, defining circumferentially-adjacent, axially-extending fingers 202 around the bracket 200, which extend toward the pipe 102. Further, the bracket 200 may have an increased diameter corresponding to the location of the fingers 202 and a reduced diameter section 203 configured to be received into the open end 139 of the gland body 138. A shoulder 204 defined between the reduced diameter section 203 and the fingers 202 may be sized to seat in a complementary shoulder 206 formed in the gland body 138, for example, proximal the second cylindrical body 126. A shoulder 208 may be formed at the base of the fingers 202, and may be sized to receive and seat a gasket 210. The gasket 210 may be an O-ring, a sleeve, and/or may be formed from one or more elastomers. Further, the gasket 210 may be sized to receive the pipe 102 snugly therethrough.

In an embodiment, the pipe 102 may be received through the nut 144, the gasket 210, the bracket 200, and gland body 138, and into the second cylindrical body 126, and slid into place, for example, assisting the sealing of the first cylindrical body 116 with the smoke detection system 106 (Figures 1 and 2). The nut 144 may then be received onto the threaded outer surfaced 140 of the gland body 138 and tightened thereto, axially compressing the gland 136. Such axial compression may seat the gasket 210 against the shoulder 208, and seat the reduced diameter section 203 of the bracket 200 against the shoulder 206. The open end 139 of the gland body 138 may be tapered radially inward as proceeding toward the shoulder 206, such that, as the bracket 200 is urged toward the shoulder 206, the fingers 202 are compressed radially inward. The fingers 202 may be circumferentially spaced apart prior to the nut 144 engaging the threaded outer surface 140, such that the fingers 202 may be deflected radially inward in the decreasing diameter of the gland body 138, and thus circumferentially together to seal with the gasket 210 and the pipe 102, without fracture or otherwise forming ridges, etc., that may reduce seal efficacy. Accordingly, the axial and/or radial compression of the gland 136 may seal the pipe 102 with the adapter 100. Accordingly, the bracket 200 and the gasket 210 may form a compression seal with the outer diameter of the pipe 102.

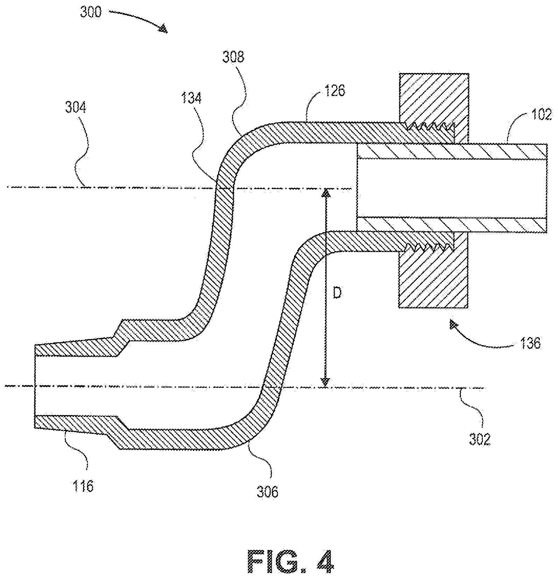

Figure 4 illustrates a cross-sectional view of another adapter 300, according to an embodiment. The adapter 300 may be structurally similar to the adapter 100, including the first and second cylindrical bodies 116, 126 and the gland 136, with the second cylindrical body 126 being sized to receive the pipe 102 and the gland 136 being configured to seal the pipe 102 with the adapter 300. Each of the first and second bodies 116, 126 may define a longitudinal axis 302, 304, on which the first and second cylindrical bodies 116, 126 are centered, respectively. The longitudinal axes 302, 304 may be parallel, but may be offset by a distance D.

The distance D may be prescribed for a retrofit of the smoke detection system 106 to the pipe 102, which may have previously formed part of a prior smoke detection system, or for any other reason in which an offset distance D is desired. For example, the pipe 102 may extend along a wall, and may be offset therefrom by a first distance, while the port 104 of the smoke detection system 106 may be offset from the wall by a second distance. In some embodiments, the distance D may be configured to make up for a lateral offset between the pipe 102 and the port 104. In still other embodiments, both a lateral and a wall offset distance disparity may be bridged by the adapter 100. The distance D may be sized to make up the difference between the first and second distances. In an embodiment, the distance D may be between about 5 mm and about 50 mm, about 10 mm and about 40 mm, about 15 mm and about 30mm, or between about 20mm and about 25mm.

The transition section 134 may also include two elbows 306, 308, with the elbow 306 connecting to the first cylindrical body 116 and the elbow 308 connecting with the second cylindrical section 126. Accordingly, the transition section 134 may have a generally S-shaped geometry, as shown. In an embodiment, the two elbows 306, 308 may turn by the same angle, for example, about 90 degrees, so that the transition section 134 fits between the parallel first and second cylindrical bodies 116, 126. In other embodiments, the angle of the elbows 306, 308 may be any other suitable angle, for example, about 45 degrees, about 30 degrees, or about 60 degrees. Further, in some embodiments, the angles may be different between the two elbows 306, 308.

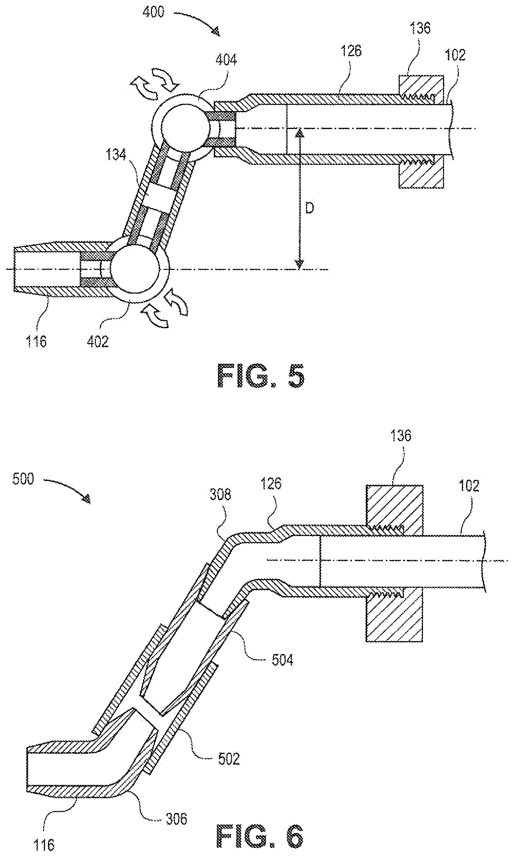

Figure 5 illustrates a cross-sectional view of another adapter 400, according to an embodiment. The adapter 400 may be similar to the adapter 300, being configured to extend between two offset and, for example, generally parallel first and second cylindrical bodies 116, 126, The adapter 400 may include ball joints 402, 404, with the ball joint 402 connecting the transition section 134 to the first cylindrical body 116 and the ball joint 404 connecting the transition section 134 to the second cylindrical body 126. The ball joints 402, 404 may be pivotal, such that the adapter 400 can be adjusted to extend across a variety of distances D by increasing or decreasing the angle between the transition section 134 and one or both of the first and second cylindrical sections 402, 404. This may also facilitate installation of the adapter 100, by allowing the adapter 100 to be contracted, such that a length of the adapter 400 may be maximized by pivoting the ball joints 402, 404 to maximize the angles between the transition section 134 and the first and second cylindrical bodies 116, 126. Once received on the pipe 102, for example, the angles can be reduced by pivoting one or both of the ball joints 402, 404, allowing the first cylindrical body 116 to increase in length, assisting in receiving the first cylindrical body 116 in the port 104 and/or port 112 (Figures 1 and 2).

Figure 6 illustrates a cross-sectional view of yet another adapter 500, according to an embodiment. The adapter 500 may be similar to the adapter 300, and may include the elbows 306, 308, which may be formed as part of the transition section 134 or as part of each of the first and second cylindrical bodies 116, 126, respectively. Further, the transition section 134 of the adapter 500 may be a telescoping cylinder, capable of expanding its axial length. For example, the transition section 134 may include an outer sleeve 502 and an inner sleeve 504, with the inner sleeve 504 being received into and sealing with, for example, press-fit into, the outer sleeve 502. The inner sleeve 504 may be coupled with the second cylindrical body 126, for example, by receiving a selectable portion of the second cylindrical body 126 into or onto the inner sleeve 504 and press-fitting the inner sleeve 504 and the second cylindrical body 126 together. In another embodiment, the transition section 134 may be or include a flexible tubing or hose extending between the elbows 306, 308.

The second end 120 of the first cylindrical body 116 may also be received into the outer sleeve 502, for example, press-fit to secure thereto and seal therewith, such that the outer sleeve 502 overlaps the first cylindrical body 116 and the inner sleeve 504. In another embodiment, the inner and outer sleeves 502, 504 may be in threaded engagement, such that rotation of the outer sleeve 502 with respect to the inner sleeve 504 (or vice versa) draws the inner sleeve 504 farther into or drives the inner sleeve 504 outward from the outer sleeve 502. Similarly, the first cylindrical body 116 may be in reverse threaded engagement with the outer sleeve 502, such that rotation of the outer sleeve 502 in one direction draws the first cylindrical body 116 and the inner sleeve 502 closer together, and rotation of the outer sleeve 502 in the opposite direction urges them apart. Furthermore, the outer sleeve 502 may overlap a second inner sleeve, with the second inner sleeve being coupled with the first cylindrical body 116, rather than overlapping the first cylindrical body 116 itself.

In other embodiments, the telescoping transition section 134 may be provide by a series of sleeves of progressively greater diameters, such that each sleeve, except the last sleeve, for example, is receivable into an adjacent sleeve. A variety of threaded, sliding, etc. embodiments for telescoping transition sections 134 are contemplated herein.

It is expressly contemplated herein that features of any one of the adapters 100, 300, 400, 500 may be implemented in any one of the other adapters 100, 300, 400. For example, embodiments of any one of the adapters 100, 300, 400 may include one or more of the elbows 306, 308 (Figures 4 and 6), one or more of the ball joints 402, 404 (Figure 5), and/or may include the telescoping transition section 134 (Figure 6). Accordingly, the features of the adapters 100, 300, 400 are not considered mutually exclusive and may be interchanged in various embodiments.

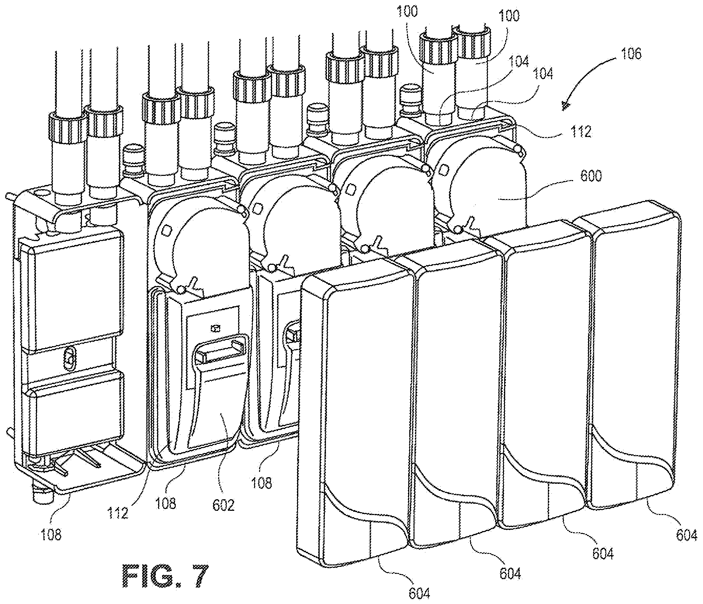

Figure 7 illustrates an exploded perspective view of the smoke detection system 106, according to an embodiment. The smoke detection system 106 may include a plurality of the backplanes 108, each coupled to one of a plurality of the ports 112. Further, each backplane 108 may include one or more, for example, two ports 104. The ports 104 may each receive one of the adapters, indicated with reference numeral 100, although it will be appreciated that any of the adapter embodiments discussed above may be employed. The adapter 100 may provide a slip coupling, supporting and/or sealing each of the pipes 102 with the ports 104.

Each of the ports 112 may include a blower 600 and a sensor 602. The sensor 602 may include any electrical and/or mechanical components to detect smoke in a volume of air and provide signals to a device indicative of the same. Further, the blower 600 may be an axial, radial fan or may be a scroll-shaped fan, configured to draw air from a plenum receiving air from one of the pipes 102 via one of the adapters 100. Moreover, one, some, or all of the ports 112 may include a cover 604, which may be coupled with, for example, fastened, welded, or otherwise secured to, the backplane 108.

In exemplary operation, each of the pipes 102 may extend from a separate or common protected area. The blower 600 may draw air in through one of the pipes 102, via the adapter 100, and deliver the air to the sensor 602. The sensor 602 may analyze the air to detect smoke therein, and provide monitoring signals to an external device, onboard memory, combinations thereof, or the like. The air may then be urged back out of the port 112 via the continued motion of the blower 600, such that the air is received by the other one of the two pipes 102 received into the backplane 108.

The adapters 100 may facilitate installation by enabling the pipes 102 to be cut, placed, or otherwise positioned, with or without the smoke detection system 106 installed. The adapters 100 may further allow for increased tolerance between the position of the end of the pipe 102 and the backplanes 108. Further, if the pipes 102 are not aligned precisely with the ports 104, the adapter 100 may bridge the offset between the end of the pipe 102 and the port 104, for example using elbows, ball joints, telescoping bodies, combinations thereof, or the like, as discussed above.

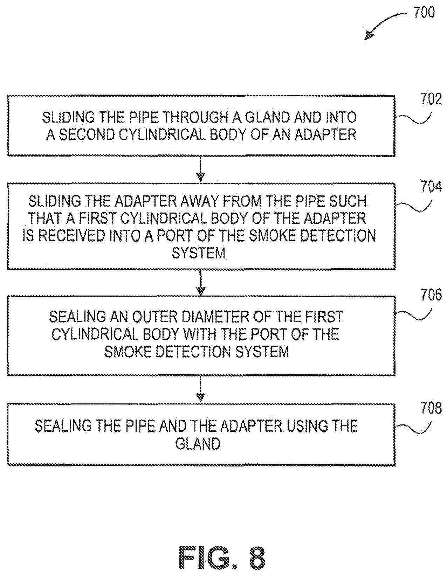

Figure 8 illustrates a flowchart of a method 700 for fitting a smoke detection system with a pipe, according to an embodiment. The method 700 may include sliding the pipe through a gland and into a second cylindrical body of an adapter, as at 702. The method 700 may also include sliding the adapter away from the pipe such that a first cylindrical body of the adapter is received into a port of the smoke detection system, as at 704. The first and second cylindrical bodies may be coupled together to define a flowpath therethrough, such that, once sealed with the port and the pipe, the adapter provides a fluid conduit therebetween.

The method 700 may further include sealing an outer diameter of the first cylindrical body with the port, as at 706, for example by press-fitting the first cylindrical body into the port. Further, the method 700 may include sealing pipe and the adapter using the gland, as at 708. In an embodiment, the method 700 may include bridging an axial offset with a transition section of the adapter extending between and connecting the first and second cylindrical bodies (i.e., the first and second cylindrical bodies may be coupled together via the transition section). Further, in some embodiments, the method 700 may include expanding and/or contracting the transition section, for example, by pivoting joints between the transition section and the first and/or second cylindrical bodies, or by providing a telescoping transition section.

Further, in an embodiment, sealing the pipe with the adapter using the gland, as at 708, may begin by receiving the pipe through a threaded nut, and sliding the threaded nut into engagement with a threaded body of the gland. Sealing at 708 may also include screwing the nut onto the threaded body, and seating a bracket at least partially in the threaded body. Sealing at 708 may further include disposing a gasket radially inside the threaded body, and deflecting deflectable fingers of the bracket radially inward to seal with the pipe via the gasket. Additionally, sealing the outer diameter of the second cylindrical body with the port, as at 706 may include press-fitting the second cylindrical section with the port.

While the present teachings have been illustrated with respect to one or more implementations, alterations and/or modifications may be made to the illustrated examples without departing from the spirit and scope of the appended claims. For example, it will be appreciated that while the process is described as a series of acts or events, the present teachings are not limited by the ordering of such acts or events. Some acts may occur in different orders and/or concurrently with other acts or events apart from those described herein. Also, not all process stages may be required to implement a methodology in accordance with one or more aspects or embodiments of the present teachings.

It will be appreciated that structural components and/or processing stages may be added or existing structural components and/or processing stages may be removed or modified. Further, one or more of the acts depicted herein may be carried out in one or more separate acts and/or phases. Furthermore, to the extent that the terms "including," "includes," "having," "has," "with," or variants thereof are used in either the detailed description and the claims, such terms are intended to be inclusive in a manner similar to the term "comprising." The term "at least one of" is used to mean one or more of the listed items may be selected. Further, in the discussion and claims herein, the term "on" used with respect to two materials, one "on" the other, means at least some contact between the materials, while "over" means the materials are in proximity, but possibly with one or more additional intervening materials such that contact is possible but not required. Neither "on" nor "over" implies any directionality as used herein.

The term "about" indicates that the value listed may be somewhat altered, as long as the alteration does not result in nonconformance of the process or structure to the illustrated embodiment. Finally, "exemplary" indicates the description is used as an example, rather than implying that it is an ideal. Other embodiments of the present teachings will be apparent to those skilled in the art from consideration of the specification and practice of the disclosure herein. It is intended that the specification and examples be considered as exemplary only, with a true scope and spirit of the present teachings being indicated by the following claims.

Terms of relative position as used in this application are defined based on a plane parallel to the conventional plane or working surface of a workpiece, regardless of the orientation of the workpiece. The term "horizontal" or "lateral" as used in this application is defined as a plane parallel to the conventional plane or working surface of a workpiece, regardless of the orientation of the workpiece. The term "vertical" refers to a direction perpendicular to the horizontal. Terms such as "on," "side," "higher," "lower," "over," "top," and "under" are defined with respect to the conventional plane or working surface being on the top surface of the workpiece, regardless of the orientation of the workpiece.

## Claims

1. An adapter (100) for coupling a smoke detection system (106) with a pipe (102) communicating with an area to be monitored, comprising:
a first, hollow cylindrical body (116) comprising a first end (118) configured to seal with a port (112) of the smoke detection system (106), and a second end (120);
a second, hollow cylindrical body (126) comprising a first end (128) coupled with the second end (120) of the first cylindrical body, and a second end (130), wherein the second end (130) of the second cylindrical body (126) receives the pipe (102); and
a gland (136) coupled with the second end (130) of the second cylindrical body (126), the gland (136) being configured to receive the pipe (102) therethrough and tighten to seal with the pipe (102), such that the pipe (102) communicates with the smoke detection system (106) via at least the first cylindrical body (116),
wherein the first cylindrical body (116) has a first outer diameter and the second cylindrical body (126) has a second outer diameter,
**characterized in that** the second outer diameter is greater than the first outer diameter, wherein the first cylindrical body (116) defines a first inner diameter and the second cylindrical body (126) defines a second inner diameter, the second inner diameter being larger than the first inner diameter and approximately equal to an outer diameter of the pipe (102),
and wherein the adapter (100) further comprises a transition section (134) extending between and connecting the first and second cylindrical bodies (116, 126) so as to define a flowpath therebetween.

2. The adapter (100) of claim 1, wherein the gland (136) comprises:
a threaded body (138, 142) coupled with the second end (130) of the second cylindrical body (126);
a bracket (200) seated at least partially in the threaded body (138, 142) and configured to receive the pipe (102); and
a nut (144) comprising a first end (146), a second end (147), and an inner surface (148) extending therebetween and comprising threads (150) along at least a portion thereof, wherein the nut (144) receives the pipe (102) along the inner surface (148), extends over at least a portion of the bracket (200), and is configured to screw onto the threaded body (138, 142).

3. The adapter (100) of claim 2, wherein the bracket (200) includes a plurality of deflectable fingers (202) extending away from the threaded body (138, 142) such that when the nut (144) is screwed onto the threaded body (138, 142), the plurality of deflectable fingers (202) deflect radially inward toward the pipe (102), wherein screwing the nut (144) onto the threaded body (138, 142) secures the seating of the bracket (200) in the threaded body (138, 142)..

4. The adapter (100) of claim 3, further comprising a gasket (210) disposed radially inside the bracket (200) and positioned between the plurality of deflectable fingers (202) and the pipe (102), such that when the plurality of deflectable fingers (202) are deflected radially inward, the bracket (200), gasket (210), and pipe (102) form a seal.

5. The adapter (100) of claim 1, wherein the second cylindrical body (126) extends a first distance between the first and second ends (118, 120) thereof, and receives the pipe (102) along a second distance, the difference between the first distance and the second distancing being a length mismatch provided between an end of the pipe (102) and the first end (128) of the second cylindrical body (126).

6. The adapter (100) of claim 1, wherein the first cylindrical body (116) comprises an outer surface (124) defining a taper, such that the first cylindrical body (116) defines a first outer diameter proximal the first end (118) and a second outer diameter proximal the second end (120), wherein the first outer diameter is less than an inner surface of the port (104) of the smoke detector system (106) and the second outer diameter is greater than the inner surface of the port (104) of the smoke detector system (106).

7. The adapter (100) of claim 1, wherein the transition section (134) is oriented at an angle with respect to the first cylindrical body (116) and at an angle with respect to the second cylindrical body (126).

8. The adapter (100) of claim 7, wherein the first cylindrical body (116) extends parallel to and is axially offset from the second cylindrical body (126).

9. The adapter (100) of claim 8, further comprising first and second ball joints (402, 404), the first ball joint (402) connecting the first cylindrical body (116) and the transition section (134), the second ball joint (404) connecting the second cylindrical body (126) and the transition section (134) wherein the transition section (134) comprises a telescoping body configured to extend a range of lengths.

10. A method of coupling a smoke detection system (106) with a pipe (102), the smoke detection system (106) comprising an adapter (100) according to any one of claims 1 to 9, the method comprising:
sliding the pipe (102) through a gland (136) and into a second cylindrical body (126) of the adapter (100);
sliding the adapter (100) away from the pipe (102) such that a first cylindrical body (116) of the adapter (100) is received into a port (104) of the smoke detection system (106), wherein the first and second cylindrical bodies (116, 126) are coupled together and define a flowpath through the adapter (100), the flowpath fluidly connecting the pipe (102) and the port (104);
sealing an outer diameter of the first cylindrical body (116) with the port (104); and
sealing pipe (102) and the adapter (100) using the gland (136).

11. The method of claim 10, further comprising bridging an offset with a transition section (134) of the adapter (100) extending between and coupling with the first and second cylindrical bodies (116, 126).

12. The method of claim 10, further comprising at least one of expanding and contracting the transition section (134) disposed between the first and second cylindrical bodies (116, 126).

13. The method of claim 10, wherein sealing the pipe (102) with the adapter (100) using the gland (136) comprises:
receiving the pipe (102) through a threaded nut (144);
sliding the threaded nut (144) into engagement with a threaded body (138, 142) of the gland (136);
screwing the nut (144) into engagement with the threaded body (138, 142);
seating a bracket (200) at least partially in the threaded body (138, 142);
disposing a gasket (210) radially inside the threaded body (138, 142); and
deflecting deflectable fingers (202) of the bracket (200) radially inward to seal with the pipe (102) via the gasket (200).

14. The method of claim 10, wherein sealing the outer diameter of the second cylindrical body (126) with the port (104) comprises press-fitting the first cylindrical body (116) with the port (104).

15. A smoke detection system (106), comprising:
a backplane (108) comprising a first port (104);
a detector module (110) comprising a sensor (602) for detecting smoke in a volume of air, and a second port (112) aligned with the first port (104) of the backplane (108), the detector module (110) being configured to receive the volume of air from the first port (104) of the backplane (108) via the second port (112); and
an adapter (100) configured to couple the first port (104) with a pipe (102), the adapter (100) comprising:
a first, hollow cylindrical body (116) comprising a first end (118) configured to be received into a seal with the first port (104), and a second end (120);
a second, hollow cylindrical body (126) comprising a first end (128) coupled with the second end (120) of the first cylindrical body (116), and a second end (130), wherein the second cylindrical body (126) receives the pipe (102) through the second end (130);
and
a gland (136) extending from the second end (130) of the second cylindrical body (126), the gland (136) being configured to receive the pipe (102) therethrough and tighten to seal with the pipe (102), such that the pipe (102) communicates with the smoke detection system (106) via the first cylindrical body (116), the transition section (134), and the second cylindrical body (126),
wherein the first cylindrical body (116) has a first outer diameter and the second cylindrical body (126) has a second outer diameter,
**characterized in that** the second outer diameter is greater than the first outer diameter, wherein the first cylindrical body (116) defines a first inner diameter and the second cylindrical body (126) defines a second inner diameter, the second inner diameter being larger than the first inner diameter and approximately equal to an outer diameter of the pipe (102),
and wherein the apparatus (100) further comprises a transition section (134) extending between and connecting the first and second cylindrical bodies (116, 126) so as to define a flowpath therebetween.

## Patentansprüche

1. Adapter (100) zum Koppeln eines Rauchmeldesystems (106) mit einem Rohr (102), das mit einem zu überwachenden Bereich verbunden ist, Folgendes umfassend:
einen ersten hohlen zylindrischen Körper (116), der ein erstes Ende (118), das dazu konfiguriert ist, mit einem Anschluss (112) des Rauchmeldesystems (106) abzudichten, und ein zweites Ende (120) umfasst;
einen zweiten hohlen zylindrischen Körper (126), der ein erstes Ende (128), das mit dem zweiten Ende (120) des ersten zylindrischen Körpers gekoppelt ist, und ein zweites Ende (130) umfasst, wobei das zweite Ende (130) des zweiten zylindrischen Körpers (126) das Rohr (102) aufnimmt; und
eine Stopfbuchse (136), die mit dem zweiten Ende (130) des zweiten zylindrischen Körpers (126) gekoppelt ist, wobei die Stopfbuchse (136) dazu konfiguriert ist, durch sie selbst das Rohr (102) aufzunehmen und sich festzuziehen, um mit dem Rohr (102) derart abzudichten, dass das Rohr (102) mit dem Rauchmeldesystem (106) über mindestens den ersten zylindrischen Körper (116) kommuniziert,
wobei der erste zylindrische Körper (116) einen ersten äußeren Durchmesser aufweist und der zweite zylindrische Körper (126) einen zweiten äußeren Durchmesser aufweist,
**dadurch gekennzeichnet, dass** der zweite äußere Durchmesser größer als der erste äußere Durchmesser ist, wobei der erste zylindrische Körper (116) einen ersten inneren Durchmesser definiert und der zweite zylindrische Körper (126) einen zweiten inneren Durchmesser definiert, wobei der zweite innere Durchmesser größer als der erste innere Durchmesser und ungefähr gleich einem äußeren Durchmesser des Rohrs (102) ist,
und wobei der Adapter (100) ferner einen Übergangsabschnitt (134) umfasst, der sich zwischen dem ersten und dem zweiten zylindrischen Körper (116, 126) erstreckt und diese verbindet, um so einen Strömungspfad dazwischen zu definieren.

2. Adapter (100) nach Anspruch 1, wobei die Stopfbuchse (136) Folgendes umfasst:
einen Gewindekörper (138, 142), der mit dem zweiten Ende (130) des zweiten zylindrischen Körpers (126) gekoppelt ist;
eine Klammer (200), die mindestens teilweise in dem Gewindekörper (138, 142) sitzt und dazu konfiguriert ist, das Rohr (102) aufzunehmen; und
eine Mutter (144), die ein erstes Ende (146), ein zweites Ende (147) und eine innere Fläche (148) umfasst, die sich dazwischen erstreckt und Gewinde (150) entlang mindestens eines Bereichs davon umfasst, wobei die Mutter (144) das Rohr (102) entlang der inneren Fläche (148) aufnimmt, sich über mindestens einen Bereich der Klammer (200) erstreckt und dazu konfiguriert ist, sich auf den Gewindekörper (138, 142) zu schrauben.

3. Adapter (100) nach Anspruch 2, wobei die Klammer (200) eine Vielzahl von biegbaren Fingern (202) beinhaltet, die sich von dem Gewindekörper (138, 142) derart weg erstrecken, dass, wenn die Mutter (144) auf den Gewindekörper (138, 142) geschraubt ist, die Vielzahl von biegbaren Fingern (202) sich radial nach innen in Richtung des Rohrs (102) biegen, wobei das Schrauben der Mutter (144) auf den Gewindekörper (138, 142) das Sitzen der Klammer (200) in dem Gewindekörper (138, 142) sicherstellt.

4. Adapter (100) nach Anspruch 3, ferner eine Dichtung (210) umfassend, die radial innerhalb der Klammer (200) angeordnet und zwischen der Vielzahl von biegbaren Fingern (202) und dem Rohr (102) derart positioniert ist, dass, wenn die Vielzahl von biegbaren Fingern (202) radial nach innen gebogen werden, die Klammer (200), die Dichtung (210) und das Rohr (102) eine Dichtung bilden.

5. Adapter (100) nach Anspruch 1, wobei der zweite zylindrische Körper (126) sich in einer ersten Abmessung zwischen dem ersten und dem zweiten Ende (118, 120) davon erstreckt und das Rohr (102) entlang einer zweiten Abmessung aufnimmt, wobei die Differenz zwischen der ersten Abmessung und der zweiten Abmessung ein Längenmissverhältnis ist, das zwischen einem Ende des Rohrs (102) und dem ersten Ende (128) des zweiten zylindrischen Körpers (126) bereitgestellt ist.

6. Adapter (100) nach Anspruch 1, wobei der erste zylindrische Körper (116) eine äußere Fläche (124) umfasst, die eine Verjüngung derart definiert, dass der erste zylindrische Körper (116) einen ersten äußeren Durchmesser proximal zu dem ersten Ende (118) und einen zweiten äußeren Durchmesser proximal zu dem zweiten Ende (120) definiert, wobei der erste äußere Durchmesser kleiner als eine innere Fläche des Anschlusses (104) des Rauchmeldesystems (106) ist und der zweite äußere Durchmesser größer als die innere Fläche des Anschlusses (104) des Rauchmeldesystems (106) ist.

7. Adapter (100) nach Anspruch 1, wobei der Übergangsabschnitt (134) in einem Winkel in Bezug auf den ersten zylindrischen Körper (116) und in einem Winkel in Bezug auf den zweiten zylindrischen Körper (126) ausgerichtet ist.

8. Adapter (100) nach Anspruch 7, wobei der erste zylindrische Körper (116) sich parallel zu dem zweiten zylindrischen Körper (126) erstreckt und axial von diesem versetzt ist.

9. Adapter (100) nach Anspruch 8, ferner ein erstes und ein zweites Kugelgelenk (402, 404) umfassend, wobei das erste Kugelgelenk (402) den ersten zylindrischen Körper (116) und den Übergangsabschnitt (134) verbindet, wobei das zweite Kugelgelenk (404) den zweiten zylindrischen Körper (126) und den Übergangsabschnitt (134) verbindet, wobei der Übergangsabschnitt (134) einen Teleskopkörper umfasst, der dazu konfiguriert ist, sich über einen Bereich von Längen zu erstrecken.

10. Verfahren zum Koppeln eines Rauchmeldesystems (106) mit einem Rohr (102), wobei das Rauchmeldesystem (106) einen Adapter (100) nach einem der Ansprüche 1 bis 9 umfasst, wobei das Verfahren Folgendes umfasst:
Schieben des Rohrs (102) durch eine Stopfbuchse (136) und in einen zweiten zylindrischen Körper (126) des Adapters (100) ;
Schieben des Adapters (100) weg von dem Rohr (102) derart, dass ein erster zylindrischer Körper (116) des Adapters (100) in einem Anschluss (104) des Rauchmeldesystems (106) aufgenommen wird, wobei der erste und der zweite zylindrische Körper (116, 126) miteinander gekoppelt sind und einen Strömungspfad durch den Adapter (100) definieren, wobei der Strömungspfad das Rohr (102) und den Anschluss (104) fluidisch verbindet;
Abdichten eines äußeren Durchmessers des ersten zylindrischen Körpers (116) mit dem Anschluss (104); und
Abdichten des Rohrs (102) und des Adapters (100) unter Verwendung der Stopfbuchse (136).

11. Verfahren nach Anspruch 10, ferner das Überbrücken eines Versatzes mit einem Übergangsabschnitt (134) des Adapters (100) umfassend, der sich zwischen dem ersten und dem zweiten zylindrischen Körper (116, 126) erstreckt und mit diesen gekoppelt ist.

12. Verfahren nach Anspruch 10, ferner mindestens eines von Expandieren und Zusammenziehen des Übergangsabschnitts (134) umfassend, der zwischen dem ersten und dem zweiten zylindrischen Körper (116, 126) angeordnet ist.

13. Verfahren nach Anspruch 10, wobei das Abdichten des Rohrs (102) mit dem Adapter (100) unter Verwendung der Stopfbuchse (136) Folgendes umfasst:
Aufnehmen des Rohrs (102) durch eine Gewindemutter (144);
Schieben der Gewindemutter (144) in Eingriff mit einem Gewindekörper (138, 142) der Stopfbuchse (136);
Schrauben der Mutter (144) in Eingriff mit dem Gewindekörper (138, 142);
Setzen einer Klammer (200) mindestens teilweise in den Gewindekörper (138, 142);
radiales Anordnen einer Dichtung (210) innerhalb des Gewindekörpers (138, 142); und
radiales Biegen von biegbaren Fingern (202) der Klammer (200) nach innen, um mit dem Rohr (102) über die Dichtung (200) abzudichten.

14. Verfahren nach Anspruch 10, wobei das Abdichten des äußeren Durchmessers des zweiten zylindrischen Körpers (126) mit dem Anschluss (104) ein Pressanpassen des ersten zylindrischen Körpers (116) mit dem Anschluss (104) umfasst.

15. Rauchmeldesystem (106), Folgendes umfassend:
eine Rückwand (108), die einen ersten Anschluss (104) umfasst;
ein Erkennungsmodul (110), das einen Sensor (602) zum Erkennen von Rauch in einem Luftvolumen und einen zweiten Anschluss (112) umfasst, der mit dem ersten Anschluss (104) der Rückwand (108) ausgerichtet ist, wobei das Erkennungsmodul (110) dazu konfiguriert ist, das Luftvolumen von dem ersten Anschluss (104) der Rückwand (108) über den zweiten Anschluss (112) aufzunehmen; und
einen Adapter (100), der dazu konfiguriert ist, den ersten Anschluss (104) mit einem Rohr (102) zu koppeln, wobei der Adapter (100) Folgendes umfasst:
einen ersten hohlen zylindrischen Körper (116), der ein erstes Ende (118), das dazu konfiguriert ist, in einer Dichtung mit dem ersten Anschluss (104) aufgenommen zu werden, und ein zweites Ende (120) umfasst;
einen zweiten hohlen zylindrischen Körper (126), der ein erstes Ende (128), das mit dem zweiten Ende (120) des ersten zylindrischen Körpers (116) gekoppelt ist, und ein zweites Ende (130) umfasst, wobei der zweite zylindrische Körper (126) das Rohr (102) durch das zweite Ende (130) aufnimmt; und
eine Stopfbuchse (136), die sich von dem zweiten Ende (130) des zweiten zylindrischen Körpers (126) erstreckt, wobei die Stopfbuchse (136) dazu konfiguriert ist, durch sie selbst das Rohr (102) aufzunehmen und sich festzuziehen, um mit dem Rohr (102) derart abzudichten, dass das Rohr (102) mit dem Rauchmeldesystem (106) über den ersten zylindrischen Körper (116), den Übergangsabschnitt (134) und den zweiten zylindrischen Körper (126) kommuniziert,
wobei der erste zylindrische Körper (116) einen ersten äußeren Durchmesser aufweist und der zweite zylindrische Körper (126) einen zweiten äußeren Durchmesser aufweist,
**dadurch gekennzeichnet, dass** der zweite äußere Durchmesser größer als der erste äußere Durchmesser ist, wobei der erste zylindrische Körper (116) einen ersten inneren Durchmesser definiert und der zweite zylindrische Körper (126) einen zweiten inneren Durchmesser definiert, wobei der zweite innere Durchmesser größer als der erste innere Durchmesser und ungefähr gleich einem äußeren Durchmesser des Rohrs (102) ist,
und wobei die Vorrichtung (100) ferner einen Übergangsabschnitt (134) umfasst, der sich zwischen dem ersten und dem zweiten zylindrischen Körper (116, 126) erstreckt und diese verbindet, um so einen Strömungspfad dazwischen zu definieren.

## Revendications

1. Adaptateur (100) permettant d'accoupler un système de détection de fumée (106) à un tuyau (102) communiquant avec une zone devant être surveillée, comprenant :
un premier corps cylindrique, creux (116) comprenant une première extrémité (118) configurée pour être scellée avec un orifice (112) du système de détection de fumée (106), et une seconde extrémité (120) ;
un second corps cylindrique, creux (126) comprenant une première extrémité (128) accouplée à la seconde extrémité (120) du premier corps cylindrique, et une seconde extrémité (130), dans lequel la seconde extrémité (130) du second corps cylindrique (126) reçoit le tuyau (102) ; et
un manchon (136) accouplé à la seconde extrémité (130) du second corps cylindrique (126), le manchon (136) étant configuré pour recevoir le tuyau (102) à travers lui et être serré pour être scellé avec le tuyau (102), de sorte que le tuyau (102) communique avec le système de détection de fumée (106) via au moins le premier corps cylindrique (116),
dans lequel le premier corps cylindrique (116) a un premier diamètre extérieur et le second corps cylindrique (126) a un second diamètre extérieur,
**caractérisé en ce que** le second diamètre extérieur est supérieur au premier diamètre extérieur, dans lequel le premier corps cylindrique (116) définit un premier diamètre intérieur et le second corps cylindrique (126) définit un second diamètre intérieur, le second diamètre intérieur étant plus grand que le premier diamètre intérieur et approximativement égal à un diamètre extérieur du tuyau (102), et dans lequel l'adaptateur (100) comprend en outre une section de transition (134) s'étendant entre et raccordant les premier et second corps cylindriques (116, 126) de manière à définir une voie de passage entre eux.

2. Adaptateur (100) selon la revendication 1, dans lequel le manchon (136) comprend :
un corps fileté (138, 142) accouplé à la seconde extrémité (130) du second corps cylindrique (126) ;
un support (200) installé au moins partiellement dans le corps fileté (138, 142) et configuré pour recevoir le tuyau (102) ; et
un écrou (144) comprenant une première extrémité (146), une seconde extrémité (147), et une surface intérieure (148) s'étendant entre elles et comprenant des filets (150) le long d'au moins une partie de celle-ci, dans lequel l'écrou (144) reçoit le tuyau (102) le long de la surface intérieure (148), s'étend sur au moins une partie du support (200), et est configuré pour être vissé sur le corps fileté (138, 142).

3. Adaptateur (100) selon la revendication 2, dans lequel le support (200) inclut une pluralité de doigts orientables (202) s'étendant à l'opposé du corps fileté (138, 142) de sorte que lorsque l'écrou (144) est vissé sur le corps fileté (138, 142), la pluralité de doigts orientables (202) s'orientent radialement vers l'intérieur vers le tuyau (102), dans lequel le vissage de l'écrou (144) sur le corps fileté (138, 142) fixe l'installation du support (200) dans le corps fileté (138, 142).

4. Adaptateur (100) selon la revendication 3, comprenant en outre une garniture (210) disposée radialement à l'intérieur du support (200) et positionnée entre la pluralité de doigts orientables (202) et le tuyau (102), de sorte que lorsque la pluralité de doigts orientables (202) sont orientés radialement vers l'intérieur, le support (200), la garniture (210) et le tuyau (102) forment un scellement.

5. Adaptateur (100) selon la revendication 1, dans lequel le second corps cylindrique (126) s'étend sur une première distance entre les première et seconde extrémités (118, 120) de celui-ci, et reçoit le tuyau (102) le long d'une seconde distance, la différence entre la première distance et le second éloignement étant une disparité de longueur prévue entre une extrémité du tuyau (102) et la première extrémité (128) du second corps cylindrique (126).

6. Adaptateur (100) selon la revendication 1, dans lequel le premier corps cylindrique (116) comprend une surface extérieure (124) définissant une pointe, de sorte que le premier corps cylindrique (116) définisse un premier diamètre extérieur plus proche de la première extrémité (118) et un second diamètre extérieur plus proche de la seconde extrémité (120), dans lequel le premier diamètre extérieur est plus petit qu'une surface intérieure de l'orifice (104) du système détecteur de fumée (106) et le second diamètre extérieur est plus grand que la première surface intérieure de l'orifice (104) du système détecteur de fumée (106).

7. Adaptateur (100) selon la revendication 1, dans lequel la section de transition (134) est orientée à un angle par rapport au premier corps cylindrique (116) et à un angle par rapport au second corps cylindrique (126).

8. Adaptateur (100) selon la revendication 7, dans lequel le premier corps cylindrique (116) s'étend parallèle au et est décalé axialement par rapport au second corps cylindrique (126) .

9. Adaptateur (100) selon la revendication 8, comprenant en outre des premier et second joints à rotule (402, 404), le premier joint à rotule (402) raccordant le premier corps cylindrique (116) et la section de transition (134), le second joint à rotule (404) raccordant le second corps cylindrique (126) et la section de transition (134) dans lequel la section de transition (134) comprend un corps télescopique configuré pour s'étendre sur une gamme de longueurs.

10. Procédé d'accouplement d'un système de détection de fumée (106) à un tuyau (102), le système de détection de fumée (106) comprenant un adaptateur (100) selon l'une quelconque des revendications 1 à 9, le procédé comprenant :
le glissement du tuyau (102) à travers un manchon (136) et dans un second corps cylindrique (126) de l'adaptateur (100) ;
le glissement de l'adaptateur (100) à l'opposé du tuyau (102) de sorte qu'un premier corps cylindrique (116) de l'adaptateur (100) soit reçu dans un orifice (104) du système de détection de fumée (106), dans lequel les premier et second corps cylindriques (116, 126) sont accouplés l'un à l'autre et définissent une voie de passage à travers l'adaptateur (100), la voie de passage raccordant de manière fluidique le tuyau (102) et l'orifice (104) ;
le scellement d'un diamètre extérieur du premier corps cylindrique (116) avec l'orifice (104) ; et
le scellement du tuyau (102) et de l'adaptateur (100) en utilisant le manchon (136).

11. Procédé selon la revendication 10, comprenant en outre le comblement d'un décalage avec une section de transition (134) de l'adaptateur (100) s'étendant entre et s'accouplant aux premier et second corps cylindriques (116, 126).

12. Procédé selon la revendication 10, comprenant en outre au moins l'une de l'expansion et la contraction de la section de transition (134) disposée entre les premier et second corps cylindriques (116, 126).

13. Procédé selon la revendication 10, dans lequel le scellement du tuyau (102) avec l'adaptateur (100) en utilisant le manchon (136) comprend :
la réception du tuyau (102) à travers un écrou fileté (144) ;
le glissement de l'écrou fileté (144) en prise avec un corps fileté (138, 142) du manchon (136) ;
le vissage de l'écrou (144) en prise avec le corps fileté (138, 142) ;
l'installation d'un support (200) au moins partiellement dans le corps fileté (138, 142) ;
la disposition d'une garniture (210) radialement à l'intérieur du corps fileté (138, 142) ; et
l'orientation de doigts orientables (202) du support (200) radialement vers l'intérieur pour qu'ils soient scellés avec le tuyau (102) via la garniture (200).

14. Procédé selon la revendication 10, dans lequel le scellement du diamètre extérieur du second corps cylindrique (126) avec l'orifice (104) comprend l'ajustement par pression du premier corps cylindrique (116) à l'orifice (104).

15. Système de détection de fumée (106), comprenant :
un panneau arrière (108) comprenant un premier orifice (104) ;
un module détecteur (110) comprenant un capteur (602) permettant de détecter de la fumée dans un volume d'air, et un second orifice (112) aligné sur le premier orifice (104) du panneau arrière (108), le module détecteur (110) étant configuré pour recevoir le volume d'air à partir du premier orifice (104) du panneau arrière (108) via le second orifice (112) ; et
un adaptateur (100) configuré pour accoupler le premier orifice (104) à un tuyau (102), l'adaptateur (100) comprenant :
un premier corps cylindrique, creux (116) comprenant une première extrémité (118) configurée pour être reçue dans un scellement avec le premier orifice (104), et une seconde extrémité (120) ;
un second corps cylindrique, creux (126) comprenant une première extrémité (128) accouplée à la seconde extrémité (120) du premier corps cylindrique (116), et une seconde extrémité (130), dans lequel le second corps cylindrique (126) reçoit le tuyau (102) à travers la seconde extrémité (130) ;
et
un manchon (136) s'étendant à partir de la seconde extrémité (130) du second corps cylindrique (126), le manchon (136) étant configuré pour recevoir le tuyau (102) à travers lui et être serré pour être scellé avec le tuyau (102), de sorte que le tuyau (102) communique avec le système de détection de fumée (106) via le premier corps cylindrique (116), la section de transition (134), et le second corps cylindrique (126),
dans lequel le premier corps cylindrique (116) a un premier diamètre extérieur et le second corps cylindrique (126) a un second diamètre extérieur,
**caractérisé en ce que** le second diamètre extérieur est supérieur au premier diamètre extérieur, dans lequel le premier corps cylindrique (116) définit un premier diamètre intérieur et le second corps cylindrique (126) définit un second diamètre intérieur, le second diamètre intérieur étant plus grand que le premier diamètre intérieur et approximativement égal à un diamètre extérieur du tuyau (102), et dans lequel l'appareil (100) comprend en outre une section de transition (134) s'étendant entre et raccordant les premier et second corps cylindriques (116, 126) de manière à définir une voie de passage entre eux.
